# EUROPÄISCHE PATENTSCHRIFT

(11) **EP 3 766 811 B1**
(45) Veröffentlichungstag und Bekanntmachung des Hinweises auf die Patenterteilung: **07.06.2023**
(21) Anmeldenummer: 20183485.0
(22) Anmeldetag: 01.07.2020
(51) Int. Cl.: B65G 47/46, B65G 47/52, B65G 47/71, B65G 47/94, B65G 67/08, B65G 67/20, B65G 47/34

(54) **FÖRDEREINRICHTUNG UND VERFAHREN ZUM WANDELN EINES SERIELL TRANSPORTIERTEN STÜCKGUTSTROMS IN EINEN PARALLEL TRANSPORTIERTEN STÜCKGUTSTROM**
CONVEYOR AND METHOD FOR CONVERTING A FLOW OF ARTICLES TRANSPORTED IN SERIES INTO A PARALLEL TRANSPORT STREAM
DISPOSITIF DE TRANSPORT ET PROCÉDÉ DE CONVERSION D'UN FLUX DE MARCHANDISES TRANSPORTÉ EN SÉRIE EN UN FLUX DE MARCHANDISES TRANSPORTÉ EN PARALLÈLE

(30) Priorität: 19.07.2019 DE 102019119595
(43) Veröffentlichungstag der Anmeldung: 20.01.2021
(73) Patentinhaber: Deutsche Post AG, 53113 Bonn (DE)
(72) Erfinder: Winnebeck, Alexander, 53121 Bonn (DE); Hartmann, Bernd, 53501 Graftschaft-Leimersdorf (DE)
(74) Vertreter: Cohausz & Florack

(56) Entgegenhaltungen:
- WO-A1-2018/065600
- CN-A- 109 178 898
- DE-A1- 10 255 843
- GB-A- 2 240 530
- JP-A- S59 207 316
- US-A- 2 949 999
- US-A- 3 160 259
- US-A- 4 461 378
- US-A- 5 009 560
- US-A- 6 015 039
- US-B2- 8 622 199

## Beschreibung

Die Erfindung betrifft eine Fördereinrichtung zum Wandeln eines seriell transportierten Stückgutstroms in einen parallel transportierten Stückgutstrom, mit einem Zufuhrbandförderer zum seriellen Zuführen des Stückgutstroms und mit einer Mehrzahl von Abfuhrbandförderern zum parallelen Abführen des zugeführten Stückgutstroms, wobei die Abfuhrbandförderer direkt oder indirekt einer Längsseite des Zufuhrbandförderers zugeordnet sind, wobei die Transportrichtungen der Abfuhrbandförderer wenigstens im Wesentlichen parallel zueinander und quer zur Transportrichtung des Zufuhrbandförderers ausgerichtet sind und wobei die Abfuhrbandförderer als Teleskopbandförderer ausgebildet sind. Ferner betrifft die Erfindung ein Verfahren zum Wandeln eines seriell transportierten Stückgutstroms in einen parallel transportierten Stückgutstrom, mit einem Zufuhrbandförderer zum seriellen Zuführen des Stückgutstroms und mit einer Mehrzahl von als Teleskopbandförderer ausgebildeten Abfuhrbandförderern zum parallelen Abführen des zugeführten Stückgutstroms, wobei die Abfuhrbandförderer direkt oder indirekt einer Längsseite des Zufuhrbandförderers zugeordnet sind, wobei die Transportrichtungen der Abfuhrbandförderer wenigstens im Wesentlichen parallel zueinander und quer zur Transportrichtung des Zufuhrbandförderers ausgerichtet sind.

Fördereinrichtungen und Verfahren zum Wandeln eines seriell transportierten Stückgutstroms in einen parallel transportierten Stückgutstrom sind bereits in unterschiedlichen Ausgestaltungen bekannt. Es geht dabei darum, Stückgüter, die wenigstens im Wesentlichen in einer Reihe hintereinander über einen Zufuhrbandförderer zugeführt werden, so auf Abfuhrbandförderer umzuleiten, dass die Stückgüter auf die Abfuhrbandförderer verteilt und dann wenigstens im Wesentlichen parallel zueinander weitertransportiert werden. Mit anderen Worten sollen aus einer Reihe von Stückgütern auf dem Zufuhrbandförderer mehrere etwa parallele Reihen von Stückgütern auf den Abfuhrbandförderern gemacht werden.

Zu diesem Zweck sind die Abfuhrbandförderer meist direkt an einem Übergabeabschnitt einer Längsseite des Zufuhrbandförderers vorgesehen, so dass die Stückgüter direkt seitlich von dem Zufuhrbandförderer auf die verschiedenen Abfuhrbandförderer gelangen können. Denkbar wäre aber auch, dass zwischen dem Zufuhrbandförderer und den Abfuhrbandförderern noch wenigstens ein kurzer Zwischenförderer vorgesehen ist, der beispielsweise als Rutsche oder geneigter Rollenförderer ausgebildet sein kann. Um die Stückgüter seitlich von dem Zuführbandförderer runter zu leiten und auf die mehreren Abfuhrbandförderer zu verteilen, sind entsprechende Leiteinrichtungen, etwa in Form von Rollen, Leitblechen oder Nocken vorgesehen. Wenn der Transportweg der Stückgüter in Richtung der Transportrichtung auf den Abfuhrbandförderern variiert werden soll, kommen Abfuhrbandförderer in Form von Teleskopbandförderern in Frage. Die Länge der Teleskopbandförderer können durch Aus- und Einfahren von einzelnen Abschnitten gegeneinander verlängert und wieder verkürzt werden.

Entsprechende Fördereinrichtungen kommen beispielsweise zum Beladen von Laderäumen zum Einsatz. Die Stückgüter können auf diese Weise über die Abfuhrbandförderer verteilt über die Breite des Laderaums angeliefert werden, wo sie dann entweder von einem Mitarbeiter ergriffen und im Laderaum abgelegt bzw. gestapelt oder automatisch abgeladen werden. Der Mitarbeiter muss mithin die einzelnen Stückgüter nicht oder nur sehr bedingt in der Querrichtung des Laderaums bewegen, also insbesondere nicht über die Breite des Laderaums hin und her tragen. Alternativ kann eine Beladung automatisch über die gesamte Breite des Laderaums erreicht werden.

Bestehende Fördereinrichtungen und Verfahren der genannten Art sind jedoch verhältnismäßig aufwendig und damit störanfällig, was zu einer Beeinträchtigung der Effizienz solcher Systeme führt. Es besteht daher insoweit noch Verbesserungsbedarf. US6015039A offenbart eine Fördereinrichtung gemäß dem Oberbegriff des Anspruchs 1 und ein Verfahren gemäß dem Oberbegriff des Anspruchs 7.

Daher liegt der vorliegenden Erfindung die Aufgabe zugrunde, die Förderrichtung und das Verfahren jeweils der eingangs genannten und zuvor näher beschriebenen Art derart auszugestalten und weiterzubilden, dass das Wandeln eines seriell transportierten Stückgutstroms in einen parallel transportierten Stückgutstrom einfacher und zuverlässiger erfolgen kann.

Diese Aufgabe wird mit einer Fördereinrichtung nach Anspruch 1 gelöst.

Die genannte Aufgabe wird ferner durch ein Verfahren nach Anspruch 7 gelöst.

Durch die Verwendung einer den Abfuhrbandförderern zugeordneten Längsseite des Obertrums des Zufuhrbandförderers, die wenigstens in einem Übergabeabschnitt des Obertrums zum Weitergeben der Stückgüter an die Abfuhrbandförderer tiefer angeordnet ist als die gegenüberliegende Längsseite des Obertrums des Zufuhrbandförderers, können die Stückgüter bedarfsweise allein durch die Schwerkraft von dem Zufuhrbandförderer in Richtung der Abfuhrbandförderer rutschen. Daher kann bedarfsweise auf zusätzliche Leiteinrichtungen vollständig verzichtet werden oder die Leiteinrichtungen können besonders einfach und zuverlässig ausgebildet werden.

Verfahrensmäßig lässt sich dies nutzen, indem mit dem Zufuhrbandförderer ein Stückgutstrom seriell zugeführt wird, bis die in der Transportrichtung vorderen Stückgüter einen bestimmten Abschnitt des Zufuhrbandförderers erreicht haben. Besonders zweckmäßig ist es dabei, wenn der Zufuhrbandförderer gestoppt wird, sobald das in der Transportrichtung des Zufuhrbandförderers vordere Stückgut den Bereich des vorderen Endes des Übergabeabschnitts erreicht. Dann werden die hintereinander im Übergabeabschnitt des Zufuhrbandförderers angeordneten Stückgüter auf die seitlich zugeordneten Abfuhrbandförderer umgeleitet. Dabei kann es sich besonders anbieten, wenn die Stückgüter im Übergabeabschnitt in einem Abstand hintereinander angeordnet sind, der wenigstens im Wesentlichen dem Abstand der Abfuhrbandförderer entspricht, und zwar vorzugsweise dem Abstand der Mittellinien der jeweils benachbarten Abfuhrbandförderer. Auf die beschriebene Weise kann dann jedes Stückgut auf einen anderen Abfuhrbandförderer übergeben werden, so dass sich der Durchsatz insgesamt steigern lässt.

Die auf die Abfuhrbandförderer umgeleiteten Stückgüter können nun wenigstens im Wesentlichen parallel zueinander weitertransportiert werden. Dies erfolgt der Einfachheit halber bevorzugt zeitgleich. Mit anderen Worten erfolgt der Transport der Stückgüter auf den Abfuhrbandförderern bevorzugt nicht nur räumlich, sondern auch zeitlich, wenigstens im Wesentlichen parallel zueinander. Währenddessen können über den Zufuhrbandförderer weitere Stückgüter zugeführt werden, um diese in einem nächsten Schritt auf die Abfuhrbandförderer umzuleiten. Besonders bevorzugt wird es aber sein, wenn der Zufuhrbandförderer erst wieder in Betreib gesetzt wird, wenn die Abfuhrbandförderer angehalten worden sind, so dass keine unnötige Reibung der Stückgüter an den Abfuhrbandförderern stattfindet, um die Stückgüter vor einer entsprechenden Beschädigung zu schützen. Da die seriell zugeführten Stückgüter in einen parallelen Stückgutstrom umgewandelt werden, führt ein schrittweises Transportieren der Stückgüter auf den Abfuhrbandförderern nicht zu einem Aufstauen der Stückgüter und gibt dem Mitarbeitern bedarfsweise genügend Zeit, die Stückgüter nacheinander von den Abfuhrbandförderern zu nehmen und in dem Laderaum abzulegen bzw. zu stapeln. Die Abfuhrbandförderer sollten dabei bevorzugt schrittweise soweit weiterbewegt werden, dass an deren hinterem Ende wieder genügend Platz ist, um jeweils ein weiteres Stückgut aufzunehmen.

Der besseren Verständlichkeit halber und zur Vermeidung unnötiger Wiederholungen werden nachfolgend die Fördereinrichtung und das Verfahren gemeinsam beschrieben, ohne jeweils im Einzelnen zwischen der Fördereinrichtung und dem Verfahren zu unterscheiden. Für den Fachmann ergibt sich jedoch anhand des Kontextes, welche Merkmale jeweils in Bezug auf die Fördereinrichtung und in Bezug auf das Verfahren besonders bevorzugt sind.

Bei einer ersten besonders bevorzugten Ausgestaltung der Fördereinrichtung ist der Zufuhrbandförderer von einer Transportstellung in die Übergabestellung und wieder zurück verstellbar ausgebildet. In der Transportstellung können die Stückgüter mithin sicher und zuverlässig transportiert werden, während die Stückgüter dann in der Übergabestellung sicher und zuverlässig an die Abführbandförderer abgegeben werden können. Dabei bietet es sich an, wenn das Obertrum in der Transportstellung wenigstens im Bereich des Übergabeabschnitts wenigstens im Wesentlichen eben ausgebildet ist. Die ebene Ausrichtung kann sich dabei insbesondre auf die Querschnitte des Obertrums wenigstens im Übergabeabschnitt beziehen, die dann eben und/oder wenigstens im Wesentlichen horizontal ausgerichtet sein können. Dabei ist es dann bedarfsweise möglich, dass das Obertrum im Übergabeabschnitt nach oben oder unten verläuft, so dass beim Transport der Stückgüter eine Höhendifferenz überwunden werden kann. In der Übergabestellung ist das Obertrum aber wenigstens in dem Übergabeabschnitt zur Seite geneigt, und zwar so, dass die den Abfuhrbandförderern zugeordnete Längsseite des Obertrums tiefer angeordnet ist als die gegenüberliegende Längsseite des Obertrums wenigstens im Übergabeabschnitt. Die Stückgüter rutschen dann vorzugsweise ohne weiteres Hinzutun von alleine von dem Zufuhrbandförderer in Richtung der Abfuhrbandförderer herunter.

Als zweite Alternative der Erfindung weisen die Abfuhrbandförderer Bänder Bereiche unterschiedlicher Haftreibung auf. Diese Bereiche sind vorzugsweise alternierend oder abwechselnd in der Transportrichtung des Bands vorgesehen. Die Bereiche geringer Haftreibung und/die Bereiche hoher Haftreibung können dabei jeweils die gleiche Längserstreckung aufweisen. Zudem können alle Bereiche die gleiche Längserstreckung aufweisen. Erforderlich ist dies jedoch nicht. Es bietet sich an, wenn die Länge der Bereiche hoher Haftreibung und/oder geringer Haftreibung etwas größer sind als die Länge, Höhe und/oder Breite der Stückgüter. Die Bereiche unterschiedlicher Haftreibung sind insbesondere zweckmäßig, wenn der Zuführbandförderer im Übergabeabschnitt und die angrenzenden Bereiche des Abfuhrbandförderers etwa V-förmig zueinander geneigt sind. Ein Verstellen des Übergabebereichs des Zuführbandförderers ist dann nicht zwingend erforderlich. Die Bereiche geringer Haftreibung können angrenzend an den Zufuhrbandförderer positioniert werden, während Stückgüter über den Zufuhrbandförderer zugeführt werden, so dass sie ohne große Reibung an den Bändern der Abfuhrbandförderer abgleiten können. Wenn die Stückgüter zugeführt sind, können die Abfuhrbandförderer gestartet werden, während der Zufuhrbandförderer angehalten werden kann. Über die Bereiche der hohen Haftreibung werden die Stückgüter dann aus dem etwa V-förmigen, durch den Übergabeabschnitt und die angrenzenden Abschnitte der Abfuhrbandförderer gebildeten Bereich der Fördereinrichtung abtransportiert. Die Haftreibung ist dann groß genug, um einen Transport der Stückgüter zu bewirken. Es kann auch vorgesehen sein, dass die Abfuhrbandförderer kontinuierlich angetrieben sind. Das Zuführen jeweils weiterer Stückgüter kann dann bedarfsweise abgestimmt an die Taktung der Abfuhrbandförderer hinsichtlich des Wechsels der Bereiche unterschiedlicher Haftreibung angrenzend an den Übergabeabschnitt des Zufuhrbandförderers erfolgen.

Der Haftreibungskoeffizient des Bereichs hoher Haftreibung weist zusammen mit einem bestimmten Stückgut, insbesondere mit einer Berührungsfläche aus Karton, vorzugsweise einen Wert auf, der wenigstens doppelt, insbesondere wenigstens dreimal, so hoch ist wie der Haftreibungskoeffizient des Bereichs geringer Haftreibung zusammen mit dem bestimmten Stückgut, insbesondere mit einer Berührungsfläche aus Karton. Alternativ oder zusätzlich ist der Haftreibungskoeffizient für den Bereich geringer Haftreibung und das bestimmte Stückgut, insbesondere mit einer Berührungsfläche aus Karton, kleiner als 0,5, vorzugsweise kleiner als 0,4, insbesondere kleiner als 0,3. Alternativ oder zusätzlich ist der Haftreibungskoeffizient für den Bereich hoher Haftreibung und das bestimmte Stückgut, insbesondere mit einer Berührungsfläche aus Karton, größer als 0,5, vorzugsweise größer als 0,6, insbesondere größer als 0,7. Der Haftreibungskoeffizient wird häufig auch als Reibungszahl bezeichnet und regelmäßig als µ_{H} oder µ_{G} angegeben.

Damit die Stückgüter im Übergabeabschnitt des Zufuhrbandförderers zuverlässig und weiter bevorzugt ohne weiteres Hinzutun von dem Zufuhrbandförderer herunterrutschen, bietet es sich an, wenn wenigstens in der Übergabestellung wenigstens der Übergabeabschnitt des Obertrums des Zufuhrbandförderers das Obertrum in einem Winkel von wenigstens 25°, vorzugsweise von wenigstens 35°, insbesondere von wenigstens 45°, zur Seite geneigt ist. Da das Obertrum keinen vollständig geraden Querschnitt im Übergabeabschnitt aufweisen muss, kann es sich bei der zuvor genannten Neigung um eine mittlere Neigung handeln. Dabei kann die Neigung bzw. der entsprechende Winkel über wenigstens im Wesentlichen die gesamte Breite des Obertrums im Übergabeabschnitt gemittelt werden. Besonders bevorzugt wird es aber dennoch sein, wenn der Neigungswinkel des Obertrums über die Breite des Obertrums gesehen wenigstens im Wesentlichen konstant ist. Dann können die Stückgüter besonders zuverlässig und ohne weiteres Hinzutun von dem Zufuhrbandförderer an die Abfuhrbandförderer abgegeben werden. Unabhängig davon ist die Neigung vorzugsweise so vorgesehen, dass die den Abfuhrbandförderern zugeordnete Längsseite des Zufuhrbandförderers nach unten hängt.

Das Wandeln des seriell transportierten Stückgutstroms in einen parallel transportierten Stückgutstrom geht bevorzugt auch mit einer Wandlung der Transportrichtung des Stückgutstroms einher. Dies kann vorzugsweise so erfolgen, dass die Transportrichtungen der Abfuhrbandförderer mit der Transportrichtung des Zufuhrbandförderers Winkel von wenigstens 60°, vorzugsweise wenigstens 70°, insbesondere wenigstens 80°, einschließen. Dabei können diese Winkel zwischen der Transportrichtung des entsprechenden Abfuhrbandförderers mit der Transportrichtung das Zufuhrbandförderers einerseits in der Transportrichtung vor und andererseits in der Transportrichtung hinter dem entsprechenden Abfuhrbandförderer gebildet werden. Besonders bevorzugt kann es dabei der Einfachheit halber und zum Zwecke der Einsparung von Bauraum sein, wenn diese Winkel wenigstens im Wesentlichen 90° betragen.

Um die Abfuhrbandförderer einerseits und den Zufuhrbandförderer andererseits unabhängig voneinander betreiben zu können, bietet es sich an, wenn den Abfuhrbandförderern und dem Zufuhrbandförderer unterschiedliche Antriebseinrichtungen zugeordnet sind. Dabei können die Abfuhrbandförderer bedarfsweise gemeinsam über eine gemeinsame Antriebseinrichtung oder über jeweils separate Antriebseinheiten bedarfsweise unabhängig voneinander angetrieben werden. Wenigstens sind aber bevorzugt die wenigstens eine Antriebseinrichtung der Abfuhrbandförderer unabhängig von der wenigstens einen Antriebseinrichtung des Zufuhrbandförderers aktivierbar vorgesehen.

Zur zweckmäßigen Steuerung der Fördereinrichtung wird als erste Alternative der Erfindung eine Steuereinrichtung vorgesehen, die dazu ausgebildet ist, den Zufuhrbandförderer und/oder die Abfuhrbandförderer taktweise zu betreiben. So können beispielsweise die Abfuhrbandförderer angehalten werden, während der Zufuhrbandförderer weitere Stückgüter nachführt. Die Stückgüter können so mit geringem Abstand zueinander hintereinander platziert werden, wodurch die Verweilzeit erhöht werden kann. Dies gibt zudem einem Mitarbeiter die Möglichkeit, viele Abfuhrbandförderer nebeneinander zu bedienen, ohne dass Stückgüter auf den Boden fallen. Insoweit ist es besonders bevorzugt, wenn die Abfuhrbandförderer jeweils taktweise betrieben werden, insbesondere wenn die Abfuhrbandförderer mit demselben Takt betrieben werden. Unabhängig davon kann der Vortrieb des Zufuhrbandförderers gestoppt werden, während die Stückgüter in Richtung der Abfuhrbandförderer weitergeleitet werden, um die Zuverlässigkeit dieses Verfahrensschritts zu verbessern und die Verteilung der Stückgüter auf die Abfuhrbandförderer gleichmäßiger zu gestalten.

Wenn die Steuereinrichtung dazu ausgebildet ist, den Transport des Zufuhrbandförderers zu stoppen, bevor der Transport der Abfuhrbandförderer aktiviert wird, kann eine zweckmäßige Entkopplung erfolgen, die die Zuverlässigkeit und Berechenbarkeit des Transports der Stückgutströme verbessert. Dies gilt insbesondere dann, wenn die Steuereinrichtung dazu ausgebildet ist, den Transport des Zufuhrbandförderers einerseits und den Transport der Abfuhrbandförderer andererseits jeweils nacheinander zu aktivieren.

Bei einer ersten besonders bevorzugten Ausgestaltung des Verfahrens wird der Zufuhrbandförderer nach dem Stoppen des Zufuhrbandförderers wenigstens in einem Übergabeabschnitt des Obertrums aus einer Transportstellung in eine Übergabestellung in Richtung der Abfuhrbandförderer geneigt, insbesondere gekippt. So kann das Obertrum wenigstens in dem Übergabeabschnitt zunächst zweckmäßig ausgrichtet sein, um die Stückgüter zuverlässig auch über längere Strecken nachzuführen. Zudem können während der Übergabe der Stückgüter in Richtung der Abfuhrbandförderer die Zufuhrbandförderer in eine zweckmäßig geneigte Position gebracht werden. Nach erfolgter Übergabe oder Weitergabe der Stückgüter in Richtung der Abfuhrbandförderer kann der Zufuhrbandförderer wenigstens im Übergabeabschnitt des Obertrums aus der Übergabestellung zurück in die Transportstellung geneigt, insbesondere gekippt, werden, so dass wieder eine zweckmäßige Ausrichtung des Obertrums für das Nachführen weiterer Stückgüter gewährleistet ist.

Alternativ oder zusätzlich können die Stückgüter entlang von Bereichen der Bänder der Abfuhrbandförderer mit geringer Haftreibung in der Transportrichtung des Zufuhrbandförderers transportiert werden. Zudem können die Stückgüter von Bereichen der Bänder der Abfuhrbandförderer mit hoher Haftreibung in den Transportrichtungen der Abfuhrbandförderer transportiert werden. Die Bereiche geringer Haftreibung und hoher Haftreibung sind dann vorzugsweise abwechselnd oder alternierend in der Transportrichtung des Bands vorgesehen. Die Bereiche geringer Haftreibung und/die Bereiche hoher Haftreibung können dabei jeweils die gleiche Längserstreckung aufweisen. Zudem können alle Bereiche die gleiche Längserstreckung aufweisen. Erforderlich ist dies jedoch nicht. Es bietet sich an, wenn die Länge der Bereiche hoher Haftreibung und/oder geringer Haftreibung etwas größer sind als die Länge, Höhe und/oder Breite der Stückgüter. Die Bereiche unterschiedlicher Haftreibung sind insbesondere zweckmäßig, wenn der Zuführbandförderer im Übergabeabschnitt und die angrenzenden Bereiche des Abfuhrbandförderers etwa V-förmig zueinander geneigt sind. Ein Verstellen des Übergabebereichs des Zuführbandförderers ist dann nicht zwingend erforderlich. Der Übergabeabschnitt des Zufuhrbandförderers ist dann in Richtung der Abfuhrbandförderer seitlich nach unten geneigt. Die angrenzenden Abschnitte der Abfuhrbandförderer sind dann ihrerseits seitlich nach unten in Richtung des Übergabeabschnitts des Zufuhrbandförderers geneigt.

Die Stückgüter können von dem Zufuhrbandförderer transportiert werden und dabei ohne große Reibung an den Bändern der Abfuhrbandförderer abgleiten. Die Abfuhrbandförderer können dann mit den Bereichen hoher Haftreibung die Stückgüter übernehmen und in den Transportrichtungen der Abfuhrbandförderer transportieren. Die Abfuhrbandförderer und/oder der Zufuhrbandförderer können bevorzugt taktweise und nacheinander betrieben werden. Es ist aber auch denkbar, dass die Abfuhrbandförderer und/oder der Zufuhrbandförderer kontinuierlich betrieben werden. Das Zuführen jeweils weiterer Stückgüter kann bedarfsweise abgestimmt an die Taktung der Abfuhrbandförderer hinsichtlich des Wechsels der Bereiche unterschiedlicher Haftreibung angrenzend an den Übergabeabschnitt des Zufuhrbandförderers erfolgen.

Der Haftreibungskoeffizient des Bereichs hoher Haftreibung weist zusammen mit einem bestimmten Stückgut, insbesondere mit einer Berührungsfläche aus Karton, vorzugsweise einen Wert auf, der wenigstens doppelt, insbesondere wenigstens dreimal, so hoch ist wie der Haftreibungskoeffizient des Bereichs geringer Haftreibung zusammen mit dem bestimmten Stückgut, insbesondere mit einer Berührungsfläche aus Karton. Alternativ oder zusätzlich ist der Haftreibungskoeffizient für den Bereich geringer Haftreibung und das bestimmte Stückgut, insbesondere mit einer Berührungsfläche aus Karton, kleiner als 0,5, vorzugsweise kleiner als 0,4, insbesondere kleiner als 0,3. Alternativ oder zusätzlich ist der Haftreibungskoeffizient für den Bereich hoher Haftreibung und das bestimmte Stückgut, insbesondere mit einer Berührungsfläche aus Karton, größer als 0,5, vorzugsweise größer als 0,6, insbesondere größer als 0,7. Der Haftreibungskoeffizient wird häufig auch als Reibungszahl bezeichnet und regelmäßig als µ_{H} oder µ_{G} angegeben.

Um den konstruktiven und verfahrensmäßigen Aufwand für das Verstellen des Obertrums zwischen der Transportstellung und der Übergabestellung zu vermeiden, kann es zweckmäßig sein, den Zufuhrbandförderer während des Transports der Stückgüter und während der Übernahme und/oder Übergabe der Stückgüter wenigstens in einem Übergabeabschnitt des Obertrums in Richtung der Abfuhrbandförderer geneigt, insbesondere gekippt, zu halten. Dann bietet es sich aber weiter an, wenn die wenigstens auf dem Übergabeabschnitt des Obertrums angeordneten Stückgüter in Kontakt mit wenigstens einem Abfuhrbandförderer gelangen. So können die Stückgüter im Übergabeabschnitt während des Transports durch den Zufuhrbandförderer zunächst durch die Abfuhrbandförderer in Kontakt mit dem Zufuhrbandförderer gehalten werden und können die Stückgüter anschließend leichter von den Abfuhrbandförderern übernommen werden, bedarfsweise ohne eine weitere Unterstützung. Bei einer entsprechenden Verfahrensführung bietet es sich zur Schonung der Stückgüter weiter an, wenn die Abfuhrbandförderer und der Zufuhrbandförderer jeweils zeitweise nacheinander betrieben werden. So wird eine unnötige Reibung der Stückgüter an den Abfuhrbandförderern und dem Zufuhrbandförderer vermieden und eine gleichmäßige Verteilung der Stückgüter auf die Abfuhrbandförderer sichergestellt.

Wenn wenigstens ein Abfuhrbandförderer nach dem Transport wenigstens eines Stückguts mit dem wenigstens einen Abfuhrbandförderer in der Teleskopierrichtung der Abfuhrbandförderer ausgefahren und/oder eingefahren wird, kann der Ort variiert werden, bis zu dem die Stückgüter transportiert werden und von einem Mitarbeiter in zweckmäßiger Weise von den Abfuhrbandförderern genommen werden können. Insbesondere beim Be- und Entladen eines Laderaums mit Stückgütern bietet es sich an, wenn die Abfuhrbandförderer schrittweise ausgefahren oder eingefahren werden, um die Abfuhrbandförderer an den sich ändernden Beladungszustand des Laderaums anzupassen. So kann bevorzugt der wenigstens eine Abfuhrbandförderer nach dem Transport unterschiedlicher Stückgüter mit dem wenigstens einen Abfuhrbandförderer schrittweise in der Teleskopierrichtung eingefahren oder ausgefahren werden.

Zudem bieten sich das Verfahren und die Fördereinrichtung insbesondere dann an, wenn als Stückgüter Packstücke verwendet werden. Bei den Packstücken handelt es sich dann um umverpackte Güter, insbesondere umverpackte Stückgüter. Für diesen Zweck kommen die vorgenannten Vorteile in besonderem Maße zum Tragen. Dabei können die Packtücke aus dem Stand der Technik bekannte Verpackungen umfassen. Besonders bevorzugt sind aber solche Packstücke mit einer Karton- und/oder Kunststoffverpackung, insbesondere Folienverpackung. Bei den Stückgütern bzw. den Packstücken kann es sich weiter vorzugsweise um Paketsendungen handeln.

Die Vorteile des zuvor beschriebenen Verfahrens kommen auch dann in besonderem Maße zum Tragen, wenn das Verfahren zum Beladen eines Laderaums, vorzugsweise eines Aufbaus eines Nutzfahrzeugs insbesondere eines Lastkraftwagens, Anhängers oder Sattelaufliegers, eingesetzt wird. So können dann sehr zweckmäßig die Stückgüter über die Abfuhrbandförderer nebeneinander in den Laderaum transportiert werden.

Dies kann noch in zweckmäßiger Weise unterstützt werden, etwa um den die Stückgüter verladenden Mitarbeiter zu entlasten oder um eine automatische Beladung des Laderaums zu begünstigen. Dazu kann wenigstens ein Abfuhrbandförderer, insbesondere die Abfuhrbandförderer, mit zunehmender Beladung des Laderaums in der Teleskopierrichtung, insbesondere schrittweise, eingefahren. Im Falle eines Entladens kann der wenigstens eine Abfuhrbandförderer auch schrittweise eingefahren werden. Zum automatischen Beladen des Laderaums können die Enden der Abführbandförderer in deren Transportrichtung gesehen in der Höhe verstellbar sein, und zwar vorzugsweise wenn die Abführbandförderer als Teleskopbandförderer ausgebildet sind.

Nachfolgend wird die Erfindung anhand einer lediglich ein Ausführungsbeispiel darstellenden Zeichnung näher erläutert. In der Zeichnung zeigt
- Fig. 1: eine erfindungsgemäße Fördereinrichtung in einer schematischen, perspektivischen Ansicht,
- Fig. 2A-C: ein Detail der Fördereinrichtung aus Fig. 1 in einer Transportstellung und in einer Übergabestellung in einer schematischen Schnittansicht während unterschiedlicher Verfahrensschritte und
- Fig. 3: einen Abfuhrförderer der Fördereinrichtung aus Fig. 1, teilweise in einem Laderaum eines Aufbaus eines Nutzfahrzugs in einer schematischen Seitenansicht und
- Fig. 4A-C: ein Detail einer alternativen Fördereinrichtung im Bereich des Übergabeabschnitts während unterschiedlicher Verfahrensschritte in einer schematischen Schnittansicht.

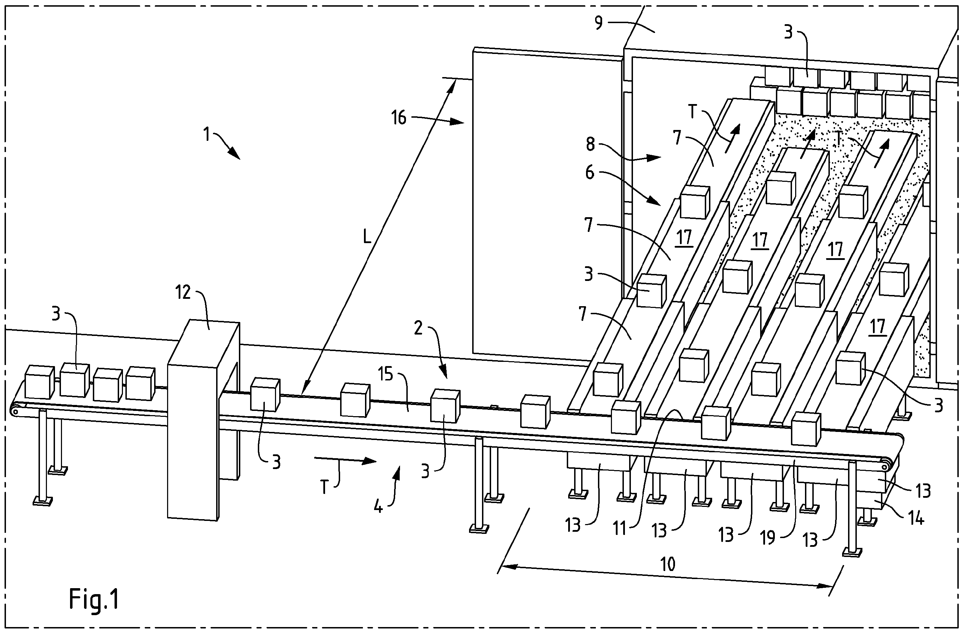

In der Fig. 1 ist eine Fördereinrichtung 1 dargestellt, mit der ein Stückgutstrom 2 aus Stückgütern 3 in einer Reihe, also seriell, über einen Zufuhrbandförderer 4 zugeführt wird, um diesen in mehrere Stückgutströme 5 zu wandeln, die als mehrere serielle Stückgutströme 5 mehrerer Abfuhrbandförderer 6 parallel zueinander abgeführt werden. Dabei handelt es sich bei den dargestellten und insoweit bevorzugten Stückgütern 3 um Packstücke in Form von Paketsendungen. Bei den Abfuhrbandförderern 6 handelt es sich um Teleskopbandförderer, deren Transportlänge L in der Transportrichtung T der Abfuhrbandförderer 6 variiert werden kann, indem einzelne Segmente 7 der Abfuhrbandförderer 6 gegeneinander ausgefahren oder eingefahren werden. Die Abfuhrbandförderer 6 können somit unterschiedlich weit in einen Laderaum 8 eines Aufbaus 9 eines Nutzfahrzeugs ausgefahren werden, so dass ein Mitarbeiter die Stückgüter 3 ohne großen körperlichen Aufwand und damit auch sehr schnell im Laderaum 8 stapeln kann oder so dass der Laderaum automatisch beladen werden kann. Mit zunehmender Beladung des Laderaums 8 werden die Abfuhrbandförderer 6 dann schrittweise eingefahren.

Die Abfuhrbandförderer 6 sind einem Übergabeabschnitt 10 einer Längsseite 11 des Zufuhrbandförderers 4 zugeordnet. Dabei grenzen die Abfuhrbandförderer 6 bei der dargestellten und insoweit bevorzugten Fördereinrichtung 1 unmittelbar an den Zufuhrbandförderer 4 an. Es könnte zwischen dem Zufuhrbandförderer 4 und den Abfuhrbandförderern 6 aber auch wenigstens eine Rutsche, wenigstens ein Rollenförderer oder ein anderes Fördermittel vorgesehen sein, über das die Stückgüter 3 von dem Zufuhrbandförderer 4 an die Abfuhrbandförderer 6 weitergegeben werden. Des Weiteren sind die Abfuhrbandförderer 6 bei der dargestellten und insoweit bevorzugten Fördereinrichtung 1 so zum Zufuhrbandförderer 4 ausgerichtet, dass die Transportrichtungen T des Zufuhrbandförderers 4 und der Abfuhrbandförderer 6 wenigstens im Wesentlichen rechtwinklig zueinander angeordnet sind. Im Übrigen stehen die Abfuhrbandförderer 6 unmittelbar nebeneinander, so dass zwischen den einzelnen Abfuhrbandförderern 6 maximal ein geringer Spalt verbleibt.

Um die Stückgüter 3 von dem Zufuhrbandförderer 4 gleichmäßig und einfach auf die Abfuhrbandförderer 6 verteilen zu können, ist bei der dargestellten und insoweit bevorzugten Fördereinrichtung 1 dem Zufuhrbandförderer 4 zugeordnet oder vorgeschaltet eine Vereinzelungseinrichtung 12 vorgesehen, welche die Stückgüter 3 so zueinander vereinzelt, dass der Abstand der jeweils aufeinanderfolgenden Stückgüter 3 wenigstens etwa dem Abstand der Abfuhrbandförderer 6 entspricht. Dabei ist jedoch nicht der Abstand der einander zugeordneten Seiten der Abfuhrbandförderer 6, also nicht der Spalt zwischen den Abfuhrbandförderern 6, gemeint, sondern der Abstand gleicher Stellen der Abfuhrbandförderer 6. Beispielsweise ist der Abstand gemeint, den die Mittellinien der einander benachbarten Abfuhrbandförderer 6 zueinander aufweisen. Wenn das in der Transportrichtung T des Zufuhrbandförderers 4 vordere Stückgut 3 des über den Zufuhrbandförderer 4 zugeführten Stückgutstroms 2 den Bereich des in dieser Richtung vorderen Abfuhrbandförderers 6 erreicht hat, kann der Zufuhrbandförderer 4 gestoppt werden. Sodann befindet sich auf dem Zufuhrbandförderer 4 angrenzend zu jedem der weiteren Abfuhrbandförderer 6 ebenfalls ein Stückgut 3.

Die entsprechende Reihe von Stückgütern 3 im Übergabeabschnitt 10 kann nun gemeinsam an die Abfuhrbandförderer 6 weitergegeben werden, die zu diesem Zeitpunkt zunächst noch gestoppt sind. Mit der Übernahme der Stückgüter 3 werden die Abfuhrbandförderer 6 aber angetrieben, und zwar bei der dargestellten und insoweit bevorzugten Fördereinrichtung 1 gemeinsam und gleichzeitig. Wenn die von den Abfuhrbandförderern 6 zuvor aufgenommenen Stückgüter 3 weiterbewegt worden sind und die Abfuhrbandförderer 6 an ihren hinteren Enden erneut Platz haben, weitere Stückgüter 3 aufzunehmen, werden die Abfuhrbandförderer 6 wieder gestoppt. Nachdem die vorderen Stückgüter 3 des Zufuhrbandförderers 4 an die Abfuhrbandförderer 6 weitergegeben worden sind, wird der Zufuhrbandförderer 4 erneut angetrieben, um weitere Stückgüter 3 zuzuführen. Der Zufuhrbandförderer 4 wird dann wieder gestoppt, wenn das in Richtung der Transportrichtung T des Zufuhrbandförderers 4 gesehen vordere Stückgut 3 der Reihe von Stückgütern 3 auf dem Zufuhrbandförderer 4 den Bereich des in dieser Richtung vorderen Abfuhrbandförderers 6 erreicht. Nun erfolgt eine erneute Weitergabe der vorderen Stückgüter 3 im Übergabeabschnitt 10 an die seitlich angrenzenden Abfuhrbandförderer 6, wie dies bereits zuvor beschrieben worden ist.

Die Abfuhrbandförderer 6 und der Zufuhrbandförderer 4 werden sodann weiter jeweils schrittweise angetrieben, so dass sich der serielle Stückgutstrom 2 des Zufuhrbandförderers 4 in mehrere serielle und untereinander parallel ausgerichtete Stückgutströme 5 wandelt. Um den entsprechenden schrittweisen bzw. getakteten Betrieb der Abfuhrbandförderer 6 und des Zufuhrbandförderers 4 bereitstellen zu können, sind bei der dargestellten und insoweit bevorzugten Fördereinrichtung 1 den Abfuhrbandförderern 6 und dem Zufuhrbandförderer 4 jeweils eigene Antriebseinrichtungen 13 zugeordnet. Die Antriebseinrichtungen 13 sind zudem mit einer gemeinsamen Steuereinrichtung 14 verbunden.

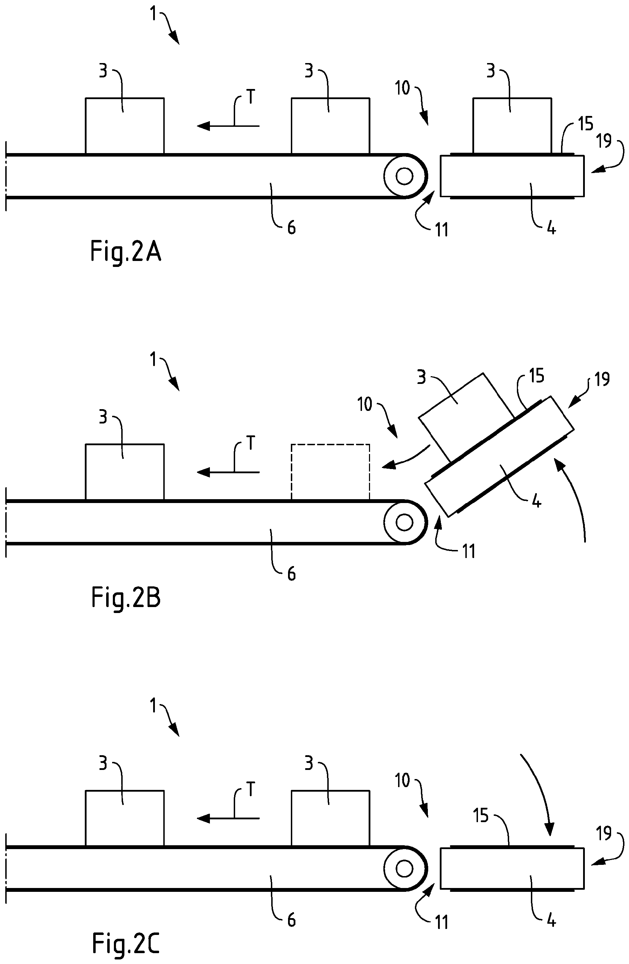

In den Fig. 2A-C ist die Fördereinrichtung 1 in einer Schnittansicht im Bereich des Übergabeabschnitts 10 des Zufuhrbandförderers 4 dargestellt. In der in der Fig. 2A dargestellten Situation befindet sich auf dem Zufuhrbandförderer 4 im Übergabeabschnitt 10 des Zufuhrbandförderers 4 und im Übernahmebereich eines Abfuhrbandförderers 6 eine Reihe von Stückgütern 3 hintereinander. Sowohl der Zufuhrbandförderer 4 als auch der Abfuhrbandförderer 6 stehen zu diesem Zeitpunkt still. Nun wird der Übergabeabschnitt 10 des Zufuhrbandförderers 4 aus der in der Fig. 2A dargestellten Transportstellung gekippt, und zwar in Richtung des angrenzenden Abfuhrbandförderers 6, wie dies in der Fig. 2B dargestellt ist.

Das Obertrum 15 des Zufuhrbandförderers 4 befindet sich nunmehr wenigstens im Übergabeabschnitt 10 in einer Übergabestellung. In der Übergabestellung ist die dem Abfuhrbandförderer 6 zugeordnete Längsseite 11 des Zufuhrbandförderers 4 wenigstens im Übergabeabschnitt 10 niedriger angeordnet als die gegenüberliegende Längsseite 19 des Zufuhrbandförderers 4. Das Obertrum 15 befindet sich in dieser Stellung in einem Querschnitt gesehen wenigstens im Wesentlichen gleichmäßig über die Breite des Obertrums 15 in diesem Abschnitt in einem Winkel zur Horizontalen von ungefähr 45°. Somit rutscht das Stückgut 3 von dem Zufuhrbandförderer 4 auf das hintere Ende des Abfuhrbandförderers 6. Dasselbe geschieht parallel mit weiteren Stückgütern 3, die an anderen Stellen des Übergabeabschnitts 10 von dem Zufuhrbandförderer 4 auf andere Abfuhrbandförderer 6 herunterrutschen.

Anschließend wird der Zufuhrbandförderer 4 wieder in die in der Fig. 2C dargestellte Transportstellung zurück gekippt und zum Heranführen weiterer Stückgüter 3 erneut angetrieben. Zeitlich oder unabhängig voneinander wird auch der Abfuhrbandförderer 6 kurzzeitig angetrieben, um an seinem hinteren Ende erneut Platz für die Aufnahme eines weiteren Stückguts 3 zu schaffen. Sodann wiederholen sich die Verfahrensschritte gemäß der Fig. 2A-C schrittweise.

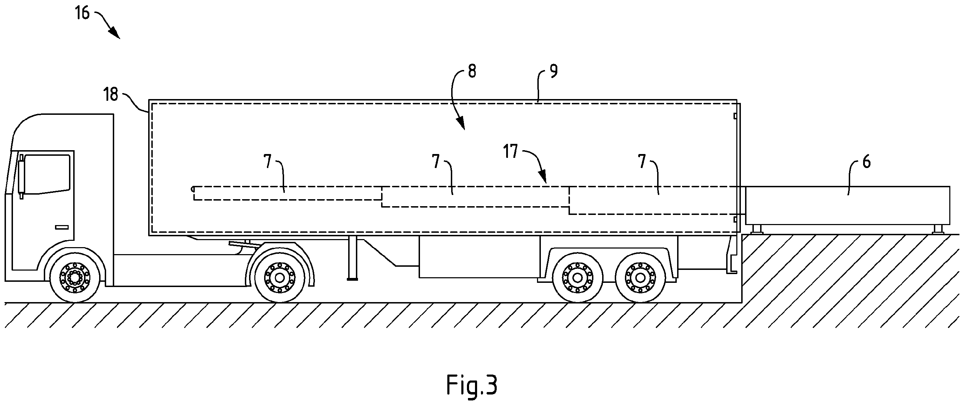

In der Fig. 3 ist ein Abfuhrbandförderer 6 der Fördereinrichtung 1 aus Fig. 1 in Form des Teleskopbandförderers dargestellt, der teilweise in einen Laderaum 8 des Aufbaus 9 des Nutzfahrzugs 16 hineinragt. Der Abfuhrbandförderer 6 weist mehrere gegeneinander ausfahrbare Segmente 7 auf, wobei sich das Band 17 des Abfuhrbandförderers 6 jeweils vom hinteren Ende des Abfuhrbandförderers 6 bis zu dessen vorderem Ende erstreckt, und zwar unabhängig davon, wie weit das vordere Ende des Abfuhrbandförderers 6 jeweils ausgefahren ist. Zu Beginn des Beladens des Laderaums 8 werden die Abfuhrbandförderer 6 bis in die Nähe der Stirnwand 18 des Laderaums 8 in diesen hineingefahren. Mit zunehmender Beladung des Laderaums 8, werden die Abfuhrbandförderer 6 dann schrittweise ausgefahren.

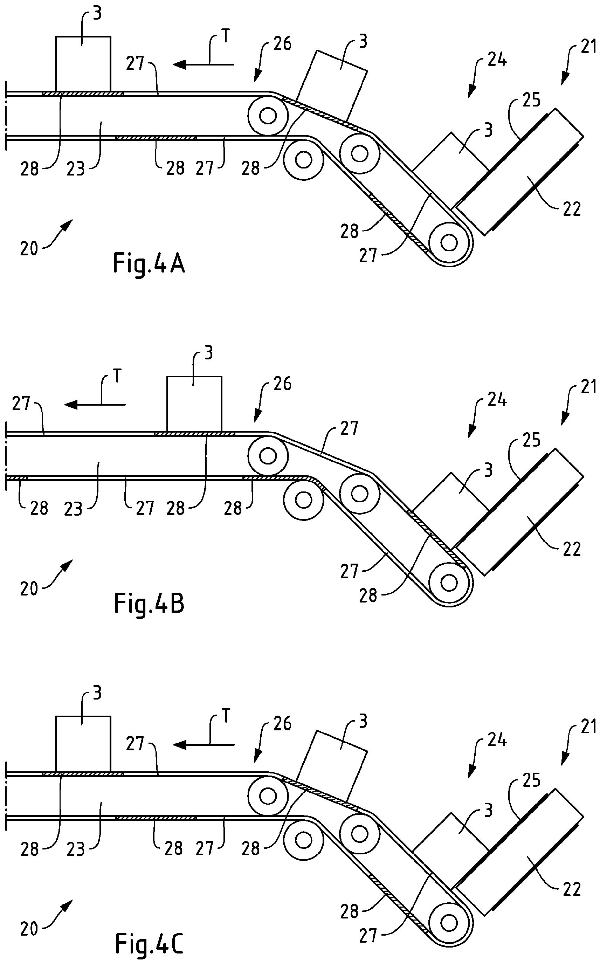

In der Fig. 4A-C ist eine alternative Fördereinrichtung 20 in einer Schnittansicht im Bereich des Übergabeabschnitts 21 des Zufuhrbandförderers 22 dargestellt. Der Übergabeabschnitt 21 bildet mit den angrenzenden Abschnitten der Abfuhrbandförderer 23 einen wenigstens im Wesentlichen V-förmigen Bereich 24 der Fördereinrichtung 20 aus. Dies hat zur Folge, dass die Stückgüter 3 während sie gemäß Fig. 4A von dem Zufuhrbandförderer 22 zugeführt werden, nicht nur in Kontakt mit dem Band 25 des Zufuhrbandförderers 22, sondern auch mit dem Band 26 des wenigstens einen Abfuhrbandförderer 23 gelangen. Angrenzend an den Übergabeabschnitt des Zufuhrbandförderers 22 ist dabei ein Bereich geringer Haftreibung 27 des Bands 26 des wenigstens einen Abfuhrbandförderers 23 vorgesehen, so dass das Stückgut 3 ohne große Reibung an dem Band 26 des wenigstens einen Abfuhrbandförderers 23 abgleiten kann, um das Stückgut 3 zu einem Abfuhrbandförderer 23 weiter vorne in der Transportrichtung T des Zufuhrbandförderers 22 zu transportieren. Wenn beispielsweise angrenzend zu den Abfuhrbandförderern 23 Stückgüter 3 vorgesehen sind, übernehmen infolge des Betriebs der Abfuhrbandförderer 23 die Bereiche mit höherer Haftreibung 28 die Stückgüter 3 und transportieren die Stückgüter 3 dann in der Transportrichtung T der Abfuhrbandförderer 23. So gelangen weitere, nachfolgende Bereiche geringer Haftreibung 27 der Bänder 26 der Abfuhrbandförderer 6 in eine Position abgrenzend an den Übergabeabschnitt 21 des Zufuhrbandförderers 22, so dass gemäß Fig. 4C nun wieder über den Zufuhrbandförderer 22 transportierte Stückgüter 3 an den Abfuhrbandförderern 23 vorbeitransportiert werden können. Der Zufuhrbandförderer 22 und/oder die Abfuhrbandförderer 23 können dabei taktweise oder kontinuierlich angetrieben werden, wobei ein taktweiser Antrieb regelungstechnisch einfacher sein dürfte.

### Bezugszeichenliste:

- 1: Fördereinrichtung
- 2: Stückgutstrom
- 3: Stückgut
- 4: Zufuhrbandförderer
- 5: Stückgutstrom
- 6: Abfuhrbandförderer
- 7: Segment
- 8: Laderaum
- 9: Aufbau
- 10: Übergabeabschnitt
- 11: Längsseite
- 12: Vereinzelungseinrichtung
- 13: Antriebseinrichtung
- 14: Steuereinrichtung
- 15: Obertrum
- 16: Nutzfahrzeug
- 17: Band
- 18: Stirnwand
- 19: Längsseite
- 20: Fördereinrichtung
- 21: Übergabeabschnitt
- 22: Zufuhrbandförderer
- 23: Abfuhrbandförderer
- 24: V-förmiger Bereich
- 25: Band
- 26: Band
- 27: Bereich geringer Haftreibung
- 28: Bereich hoher Haftreibung
- L: Transportlänge
- T: Transportrichtung

## Patentansprüche

1. Fördereinrichtung (1,20) zum Wandeln eines seriell transportierten Stückgutstroms (2) in einen parallel transportierten Stückgutstrom (5), mit einem Zufuhrbandförderer (4,22) zum seriellen Zuführen des Stückgutstroms (2) und mit einer Mehrzahl von Abfuhrbandförderern (6,23) zum parallelen Abführen des zugeführten Stückgutstroms (2), wobei die Abfuhrbandförderer (6,23) direkt oder indirekt einer Längsseite (11) des Zufuhrbandförderers (4,22) zugeordnet sind, wobei die Transportrichtungen (T) der Abfuhrbandförderer (6) wenigstens im Wesentlichen parallel zueinander und quer zur Transportrichtung (T) des Zufuhrbandförderers (4,22) ausgerichtet sind und wobei die den Abfuhrbandförderern (6,23) zugeordnete Längsseite (11) des Obertrums (15) des Zufuhrbandförderers (4,22), insbesondere in einer Übergabestellung und, wenigstens in einem Übergabeabschnitt (10,21) des Obertrums (15) zum Weitergeben der Stückgüter (3) an die Abfuhrbandförderer (6,23) tiefer angeordnet ist als die gegenüberliegende Längsseite (19) des Obertrums (15) des Zufuhrbandförderers (4,22),
**dadurch gekennzeichnet, dass**
die Abfuhrbandförderer (6,23) als Teleskopbandförderer ausgebildet sind, wobei eine zum taktweisen Betrieb des Zufuhrbandförderers (4,22) und/oder der Abfuhrbandförderer (6,23) ausgebildete Steuereinrichtung (14) vorgesehen ist und/oder die Abfuhrbandförderer (23) Bänder (26) mit Bereichen unterschiedlicher Haftreibung (27,28) aufweisen.

2. Fördereinrichtung nach Anspruch 1,
**dadurch gekennzeichnet, dass**
der Zufuhrbandförderer (4,22) von einer Transportstellung mit einer wenigstens im Wesentlichen ebenen Ausrichtung wenigstens des Übergabeabschnitts (10,21) des Obertrums (15) in die Übergabestellung mit nach unten geneigter, den Abführbandförderern (6,23) zugeordneten Längsseite (11) des Obertrums (15) wenigstens des Übergabeabschnitts (10,21) und zurück verstellbar ist.

3. Fördereinrichtung nach Anspruch 1 oder 2,
**dadurch gekennzeichnet, dass**
die Bereiche unterschiedlicher Haftreibung (27,28) alternierend angeordnet sind und dass, vorzugsweise, der Übergabeabschnitt (21) und die angrenzenden Abschnitte der Abfuhrbandförderer (23) gemeinsam einen wenigstens im Wesentlichen V-förmigen Bereich (24) der Fördereinrichtung (20) ausbilden.

4. Fördereinrichtung nach einem der Ansprüche 1 bis 3,
**dadurch gekennzeichnet, dass** wenigstens in der Übergabestellung wenigstens der Übergabeabschnitt (10) des Obertrums (15) des Zufuhrbandförderers (4,22) in einem bezogen auf wenigstens im Wesentlichen die gesamte Breite des Obertrums (15) gemittelten Winkel von wenigstens 25°, vorzugsweise von wenigstens 35°, insbesondere von wenigstens 45°, zu der den Abfuhrbandförderern zugeordneten Längsseite (11) des Zufuhrbandförderers (4,22) nach unten geneigt ist und/oder dass die Transportrichtungen (T) der Abfuhrbandförderer (6,23) mit der Transportrichtung (T) des Zufuhrbandförderers (4,22) Winkel von wenigstens 60°, vorzugsweise wenigstens 70°, insbesondere wenigstens 80°, einschließen.

5. Fördereinrichtung nach einem der Ansprüche 1 bis 4,
**dadurch gekennzeichnet, dass**
den Abfuhrbandförderern (6,23) und dem Zufuhrbandförderer (4,22) unterschiedliche Antriebseinrichtungen (13) zugeordnet sind und dass die wenigstens eine Antriebseinrichtung (13) der Abfuhrbandförderer (6,23) unabhängig von der wenigstens einen Antriebseinrichtung (13) des Zufuhrbandförderers (4,22) aktivierbar sind.

6. Fördereinrichtung nach einem der Ansprüche 1 bis 5,
**dadurch gekennzeichnet, dass**
die Steuereinrichtung (14) dazu ausgebildet ist, den Transport des Zufuhrbandförderers (4,22) zu stoppen, bevor der Transport der Abfuhrbandförderer (6,23) aktiviert wird, und dass, vorzugsweise, die Steuereinrichtung (14) dazu ausgebildet ist, den Transport des Zufuhrbandförderers (4,23) einerseits und den Transport der Abfuhrbandförderer (6,22) andererseits jeweils nacheinander zu aktivieren.

7. Verfahren zum Wandeln eines seriell transportierten Stückgutstroms (2) in einen parallel transportierten Stückgutstrom (5) mit einem Zufuhrbandförderer (4,22) zum seriellen Zuführen des Stückgutstroms (2) **gekennzeichnet durch** eine Mehrzahl von als Teleskopbandförderer ausgebildeten Abfuhrbandförderern (6,23) zum parallelen Abführen des zugeführten Stückgutstroms (5), wobei die Abfuhrbandförderer (6,23) direkt oder indirekt einer Längsseite (11) des Zufuhrbandförderers (4,22) zugeordnet sind, wobei die Transportrichtungen (T) der Abfuhrbandförderer (6,23) wenigstens im Wesentlichen parallel zueinander und quer zur Transportrichtung (T) des Zufuhrbandförderers (4,22) ausgerichtet sind, vorzugsweise mit einer Fördereinrichtung (1) nach einem der Ansprüche 1 bis 6,
- bei dem mittels des Zufuhrbandförderers (4,22) ein Stückgutstrom (2) seriell zugeführt wird,
- bei dem der Zufuhrbandförderer (4,22) gestoppt wird, wenn oder bevor die in der Transportrichtung (T) des Zufuhrbandförderers (4,22) vorderen Stückgüter (3) das in der Transportrichtung (T) des Zufuhrbandförderers (4,22) vordere Ende des Zufuhrbandförderers (4,22) erreichen,
- bei dem die Stückgüter (3) von dem Zufuhrbandförderer (4,22) an die Abfuhrbandförderer (6,23) übergeben oder durch die Abfuhrbandförderer (6) von dem Zufuhrbandförderer (4,22) übernommen werden,
- bei dem die Stückgüter (3), insbesondere wenigstens im Wesentlichen zeitgleich, von den Abfuhrbandförderern (6,23) quer zur Transportrichtung (T) des Zufuhrbandförderers (4,22) von dem Zufuhrbandförderer (4,22) weg transportiert werden,
- bei dem der Zufuhrbandförderer (4,22) weitere Stückgüter (3) zu den Abfuhrbandförderern (6,23) zuführt.

8. Verfahren nach Anspruch 7,
- bei dem der Zufuhrbandförderer (4,22) nach dem Stoppen des Zufuhrbandförderers (4,22) wenigstens in einem Übergabeabschnitt (10,21) des Obertrums (15) aus einer Transportstellung in eine Übergabestellung in Richtung der Abfuhrbandförderer (6,23) geneigt, insbesondere gekippt, wird und
- bei dem nach der Übergabe der Stückgüter (3) an die Abfuhrbandförderer (6,23) der Zufuhrbandförderer (4,22) wenigstens im Übergabeabschnitt (10,21) des Obertrums (15) aus der Übergabestellung zurück in die Transportstellung geneigt, insbesondere gekippt, wird.

9. Verfahren nach Anspruch 7 oder 8,
- bei dem die Stückgüter (3) entlang von Bereichen der Bänder (26) der Abfuhrbandförderer (23) mit geringer Haftreibung (27) in der Transportrichtung (T) des Zufuhrbandförderers (22) transportiert werden und
- bei dem die Stückgüter (3) von Bereichen der Bänder (26) der Abfuhrbandförderer (23) mit hoher Haftreibung (28) in den Transportrichtungen (T) der Abfuhrbandförderer (23) transportiert werden und bei dem sich bei den Bändern (26) die Bereiche geringer Haftreibung (27) und die Bereiche hoher Haftreibung (28) abwechseln.

10. Verfahren nach Anspruch einem der Ansprüche 7 bis 9,
- bei dem der Zufuhrbandförderer (4,22) während des Transports der Stückgüter (3) und während der Übernahme und/oder Übergabe der Stückgüter (3) wenigstens in einem Übergabeabschnitt (10,21) des Obertrums (15) in Richtung der Abfuhrbandförderer (6,23) geneigt, insbesondere gekippt, ist und
- bei dem die wenigstens auf dem Übergabeabschnitt (10,21) des Obertrums (15) angeordneten Stückgüter (3) in Kontakt mit wenigstens einem Abfuhrbandförderer (6,23) gelangen.

11. Verfahren nach einem der Ansprüche 7 bis 10,
- bei dem wenigstens ein Abfuhrbandförderer (6,23) nach dem Transport wenigstens eines Stückguts (3) mit dem wenigstens einen Abfuhrbandförderer (6,23) in der Teleskopierrichtung ausgefahren oder eingefahren wird und
- bei dem der wenigstens eine Abfuhrbandförderer (6,23) nach dem Transport unterschiedlicher Stückgüter (3) mit dem wenigstens einen Abfuhrbandförderer (6,23) schrittweise in der Teleskopierrichtung eingefahren oder ausgefahren wird.

12. Verfahren nach einem der Ansprüche 7 bis 11,
bei dem Packstücke als Stückgüter (3) mit dem Zufuhrbandförderer (4,22) und den Abfuhrbandförderern (6,23) transportiert werden.

13. Verfahren zum Beladen eines Laderaums (8), vorzugsweise eines Aufbaus (9) eines Nutzfahrzeugs (16) insbesondere eines Lastkraftwagens, Anhängers oder Sattelaufliegers, unter Verwendung des Verfahrens nach einem der Ansprüche 7 bis 12,
- bei dem die Stückgüter (3) über die Abfuhrbandförderer (6,23) nebeneinander in den Laderaum (8) transportiert werden.

14. Verfahren nach Anspruch 13,
- bei dem wenigstens ein Abfuhrförderer (6,23), insbesondere die Abfuhrbandförderer (6,23), mit zunehmender Beladung des Laderaums (8) in der Teleskopierrichtung, insbesondere schrittweise, eingefahren wird/werden.

## Claims

1. Conveyor device (1, 20) for converting a serially transported piece goods stream (2) into a parallelly transported piece goods stream (5), having a feed belt conveyor (4, 22) for serially feeding the piece goods stream (2) and having a plurality of discharge belt conveyors (6, 23) for parallelly discharging the fed piece goods stream (2), wherein the discharge belt conveyors (6, 23) are directly or indirectly assigned to a longitudinal side (11) of the feed belt conveyor (4, 22), wherein the transport directions (T) of the discharge belt conveyors (6) are aligned at least substantially parallel to one another and transverse to the transport direction (T) of the feed belt conveyor (4, 22) and wherein the longitudinal side (11) of the upper strand (15) of the feed belt conveyor (4, 22) assigned to the discharge belt conveyors (6, 23), in particular in a transfer position, at least in a transfer section (10, 21) of the upper strand (15) for relaying the piece goods (3) to the discharge belt conveyors (6, 23), is arranged lower than the opposite longitudinal side (19) of the upper strand (15) of the feed belt conveyor (4, 22), **characterised in that** the discharge belt conveyors (6, 23) are designed as telescopic belt conveyors, wherein a control device (14) designed for the timed operation of the feed belt conveyor (4, 22) and/or the discharge belt conveyors (6, 23) is provided and/or the discharge belt conveyors (23) have belts (26) with regions of different static friction (27, 28).

2. Conveyor device according to claim 1, **characterised in that** the feed belt conveyor (4, 22) can be adjusted from a transport position having an at least substantially planar alignment, at least of the transfer section (10, 21) of the upper strand (15), into the transfer position having a downwards inclined longitudinal side (11) of the upper strand (15), at least of the transfer section (10, 21), that is assigned to the discharge belt conveyors (6, 23), and back.

3. Conveyor device according to claim 1 or 2, **characterised in that** the regions of different static friction (27, 28) are arranged alternately and **in that**, preferably, the transfer section (21) and the adjoining sections of the discharge belt conveyors (23) together form an at least substantially V-shaped region (24) of the conveyor device (20).

4. Conveyor device according to any one of claims 1 to 3, **characterised in that**, at least in the transfer position, at least the transfer section (10) of the upper strand (15) of the feed belt conveyor (4, 22) is inclined downward at an averaged angle, in relation to at least substantially the total width of the upper strand (15), of at least 25°, preferably of at least 35°, in particular of at least 45°, to the longitudinal side (11) of the feed belt conveyor (4, 22) assigned to the discharge belt conveyors and/or **in that** the transport directions (T) of the discharge belt conveyors (6, 23) form, with the transport direction (T) of the feed belt conveyor (4, 22), angles of at least 60°, preferably at least 70°, in particular at least 80°.

5. Conveyor device according to any one of claims 1 to 4, **characterised in that** different drive devices (13) are assigned to the discharge belt conveyors (6, 23) and the feed belt conveyor (4, 22) and **in that** the at least one drive device (13) of the discharge belt conveyors (6, 23) can be activated independently of the at least one drive device (13) of the feed belt conveyor (4, 22).

6. Conveyor device according to any one of claims 1 to 5, **characterised in that** the control device (14) is designed to stop the transport of the feed belt conveyor (4, 22) before the transport of the discharge belt conveyors (6, 23) is activated and **in that**, preferably, the control device (14) is designed to activate the transport of the feed belt conveyor (4, 23), on the one hand, and the transport of the discharge belt conveyors (6, 22), on the other hand, respectively one after the other.

7. Method for converting a serially transported piece goods stream (2) into a parallelly transported piece goods stream (5) with a feed belt conveyor (4, 22) for serially feeding the piece goods stream (2) **characterised by** a plurality of discharge belt conveyors (6, 23) designed as telescopic belt conveyors for the parallel discharge of the fed piece goods stream (5), wherein the discharge belt conveyors (6, 23) are directly or indirectly assigned to a longitudinal side (11) of the feed belt conveyor (4, 22), wherein the transport directions (T) of the discharge belt conveyors (6, 23) are aligned at least substantially parallel to one another and transverse to the transport direction (T) of the feed belt conveyor (4, 22), preferably with a conveyor device (1) according to any one of claims 1 to 6,
- in which a piece goods stream (2) is fed serially by means of the feed belt conveyor (4, 22),
- in which the feed belt conveyor (4, 22) is stopped when or before the, in the transport direction (T) of the feed belt conveyor (4, 22), front piece goods (3) reach the, in the transport direction (T) of the feed belt conveyor (4, 22), front end of the feed belt conveyor (4, 22),
- in which the piece goods (3) are transferred from the feed belt conveyor (4, 22) to the discharge belt conveyors (6, 23) or picked up by the discharge belt conveyors (6) from the feed belt conveyor (4, 22),
- in which the piece goods (3), in particular at least substantially simultaneously, are transported away from the feed belt conveyor (4, 22) by the discharge belt conveyors (6, 23) transverse to the transport direction (T) of the feed belt conveyor (4, 22),
- in which the feed belt conveyor (4, 22) feeds further piece goods (3) to the discharge belt conveyors (6, 23).

8. Method according to claim 7,
- in which the feed belt conveyor (4, 22) is inclined, in particular tilted, at least in a transfer section (10, 21) of the upper strand (15) in the direction of the discharge belt conveyors (6, 23) out of a transport position into a transfer position after the stoppage of the feed belt conveyor (4, 22), and
- in which, after the transfer of the piece goods (3) to the discharge belt conveyors (6, 23), the feed belt conveyor (4, 22) is inclined, in particular tilted, at least in the transfer section (10, 21) of the upper strand (15) out of the transfer position back into the transport position.

9. Method according to claim 7 or 8,
- in which the piece goods (3) are transported along regions of the belts (26) of the discharge belt conveyors (23) with low static friction (27) in the transport direction (T) of the feed belt conveyor (22) and
- in which the piece goods (3) are transported from regions of the belts (26) of the discharge belt conveyors (23) with high static friction (28) in the transport directions (T) of the discharge belt conveyors (23) and in which, in the case of the belts (26), the regions of low static friction (27) and the regions of high static friction (28) alternate.

10. Method according to any one of claims 7 to 9,
- in which the feed belt conveyor (4, 22) is inclined, in particular tilted, at least in a transfer section (10, 21) of the upper strand (15) in the direction of the discharge belt conveyors (6, 23) during the transport of the piece goods (3) and during the pick-up and/or transfer of the piece goods (3), and
- in which the piece goods (3) arranged at least on the transfer section (10, 21) of the upper strand (15) come into contact with at least one discharge belt conveyor (6, 23).

11. Method according to any one of claims 7 to 10,
- in which at least one discharge belt conveyor (6, 23) is extended or retracted in the telescoping direction after the transport of at least one piece goods item (3) with the at least one discharge belt conveyor (6, 23) and
- in which the at least one discharge belt conveyor (6, 23) is retracted or extended stepwise in the telescoping direction after the transport of different piece goods (3) with the at least one discharge belt conveyor (6, 23).

12. Method according to any one of claims 7 to 11, in which packages are transported as piece goods (3) with the feed belt conveyor (4, 22) and the discharge belt conveyors (6, 23).

13. Method for loading a load compartment (8), preferably a body (9) of a commercial vehicle (16), in particular a truck, trailer or semitrailer, using the method according to any one of claims 7 to 12,
- in which the piece goods (3) are transported side by side into the load compartment (8) via the discharge belt conveyors (6, 23).

14. Method according to claim 13,
- in which at least one discharge belt conveyor (6, 23), in particular the discharge belt conveyors (6, 23), is/are retracted, in particular stepwise, in the telescoping direction, with increasing loading of the load compartment (8).

## Revendications

1. Dispositif de transport (1, 20) pour convertir un flux de marchandises de détail transportées en série (2) en un flux de marchandises de détail transportées en parallèle (5), avec un convoyeur à bande d'alimentation (4, 22) pour l'alimentation en série du flux de marchandises de détail (2) et avec une pluralité de convoyeurs à bande d'évacuation (6, 23) pour l'évacuation parallèle du flux de marchandises de détail (2) acheminées, les convoyeurs à bande d'évacuation (6, 23) étant associés, directement ou indirectement, à un côté longitudinal (11) du convoyeur à bande d'alimentation (4, 22), les sens de transport (T) des convoyeurs à bande d'évacuation (6) étant orientés au moins sensiblement parallèle entre eux et transverse au sens de transport (T) du convoyeur à bande d'alimentation (4, 22) et le côté longitudinal (11) du brin supérieur (15) du convoyeur à bande d'alimentation (4, 22) associé aux convoyeurs à bande d'évacuation (6, 23) étant agencé plus bas, notamment dans une position de transfert et, au moins dans une section de transfert (10, 21) du brin supérieur (15), pour transmettre les marchandises de détail (3) aux convoyeurs à bande d'évacuation (6, 23) par rapport au côté longitudinal opposé (19) du brin supérieur (15) du convoyeur à bande d'alimentation (4, 22), **caractérisé en ce que** les convoyeurs à bande d'évacuation (6, 23) sont conçus comme des convoyeurs à bande télescopiques, un dispositif de commande (14) conçu pour le fonctionnement cadencé du convoyeur à bande d'alimentation (4, 22) et/ou des convoyeurs à bande d'évacuation (6, 23) étant prévu et/ou les convoyeurs à bande d'évacuation (23) présentant des bandes (26) avec des parties à différent frottement par adhérence (27, 28).

2. Dispositif de transport selon la revendication 1, **caractérisé en ce que** le convoyeur à bande d'alimentation (4, 22) peut être déplacé d'une position de transport, avec au moins une orientation sensiblement plane d'au moins la section de transfert (10, 21) du brin supérieur (15), en la position de transfert, avec un côté longitudinal (11) du brin supérieur (15) d'au moins la section de transfert (10, 21) incliné vers le bas, associé aux convoyeurs à bande d'évacuation (6, 23) et inversement.

3. Dispositif de transport selon la revendication 1 ou 2, **caractérisé en ce que** les parties à différent frottement par adhérence (27, 28) sont agencées de manière alternée et **en ce que**, de préférence, la section de transfert (21) et les sections adjacentes des convoyeurs à bande d'évacuation (23) forment ensemble une partie au moins essentiellement en forme de V (24) du dispositif de transport (20).

4. Dispositif convoyeur selon l'une des revendications 1 à 3, **caractérisé en ce qu'**au moins dans la position de transfert, la section de transfert (10) du brin supérieur (15) du convoyeur à bande d'alimentation (4, 22) est inclinée vers le bas, dans un angle moyen d'au moins 25°, de préférence d'au moins 35°, notamment d'au moins 45°, par rapport à au moins essentiellement toute la largeur du brin supérieur (15), relativement au côté longitudinal (11) du convoyeur à bande d'alimentation (4, 22) associé aux convoyeurs à bande d'évacuation et/ou **en ce que** les directions de transport (T) des convoyeurs à bande d'évacuation (6, 23) forment, avec le sens de transport (T) du convoyeur à bande d'alimentation (4, 22), un angle d'au moins 60°, de préférence d'au moins 70°, notamment d'au moins 80°.

5. Dispositif de transport selon l'une des revendications 1 à 4, **caractérisé en ce que** des dispositifs d'entraînement (13) différents sont associés aux convoyeurs à bande d'évacuation (6, 23) et au convoyeur à bande d'alimentation (4, 22) et **en ce que** ledit au moins un dispositif d'entraînement (13) des convoyeurs à bande d'évacuation (6, 23) peut être activé indépendamment dudit au moins un dispositif d'entraînement (13) du convoyeur à bande d'alimentation (4, 22).

6. Dispositif de transport selon l'une des revendications 1 à 5, **caractérisé en ce que** le dispositif de commande (14) est conçu pour arrêter le transport du convoyeur à bande d'alimentation (4, 22) avant que le transport des convoyeurs à bande d'évacuation (6, 23) ne soit activé et **en ce que**, de préférence, le dispositif de commande (14) est conçu pour activer successivement le transport du convoyeur à bande d'alimentation (4, 23) d'une part et le transport des convoyeurs à bande d'évacuation (6, 22) d'autre part.

7. Procédé pour convertir un flux de marchandises de détail transportées en série (2) en un flux de marchandises de détail transportées en parallèle (5) avec un convoyeur à bande d'alimentation (4, 22) pour l'alimentation en série du flux de marchandises de détail (2) **caractérisé par** une pluralité de convoyeurs à bande d'évacuation (6, 23) conçus comme convoyeurs à bande télescopique pour l'évacuation en parallèle du flux de marchandises de détail (5) acheminées, les convoyeurs à bande d'évacuation (6, 23) étant associés, directement ou indirectement, à un côté longitudinal (11) du convoyeur à bande d'alimentation (4, 22), les sens de transport (T) des convoyeurs à bande d'évacuation (6, 23) étant au moins sensiblement parallèles entre eux et transverse au sens de transport (T) du convoyeur à bande d'alimentation (4, 22), de préférence avec un dispositif convoyeur (1) selon l'une des revendications 1 à 6,
- dans lequel un flux de marchandises de détail (2) est acheminé en série à l'aide du convoyeur à bande d'alimentation (4, 22),
- dans lequel le convoyeur à bande d'alimentation (4, 22) est arrêté lorsque ou avant que les marchandises de détail (3) situées à l'avant dans le sens du transport (T) du convoyeur à bande d'alimentation (4, 22) n'atteignent l'extrémité avant du convoyeur à bande d'alimentation (4, 22) dans le sens du transport (T) du convoyeur à bande d'alimentation (4, 22),
- dans lequel les marchandises de détail (3) sont transférées du convoyeur à bande d'alimentation (4, 22) aux convoyeurs à bande d'évacuation (6, 23) ou sont prises en charge par les convoyeurs à bande d'évacuation (6) à partir du convoyeur à bande d'alimentation (4, 22),
- dans lequel les marchandises de détail (3) sont transportées, notamment au moins essentiellement simultanément, par les convoyeurs à bande d'évacuation (6, 23), transversalement par rapport au sens de transport (T) du convoyeur à bande d'alimentation (4, 22) en s'éloignant du convoyeur à bande d'alimentation (4, 22),
- dans lequel le convoyeur à bande d'alimentation (4, 22) achemine d'autres marchandises de détail (3) vers les convoyeurs à bande d'évacuation (6, 23).

8. Procédé selon la revendication 7,
- dans lequel, après l'arrêt du convoyeur à bande d'alimentation (4, 22), le convoyeur à bande d'alimentation (4, 22), au moins dans une section de transfert (10, 21) du brin supérieur (15), est incliné, notamment basculé, depuis une position de transport vers une position de transfert en direction des convoyeurs à bande d'évacuation (6, 23) et
- dans lequel, après le transfert des marchandises de détail (3) vers les convoyeurs à bande d'évacuation (6, 23), le convoyeur à bande d'alimentation (4, 22), au moins dans la section de transfert (10, 21) du brin supérieur (15), est à nouveau incliné, notamment basculé, de la position de transfert vers la position de transport.

9. Procédé selon la revendication 7 ou 8,
- dans lequel les marchandises de détail (3) sont transportées le long des parties des bandes (26) des convoyeurs à bande d'évacuation (23) avec un frottement par adhérence (27) minime dans le sens de transport (T) du convoyeur à bande d'alimentation (22) et
- dans lequel les marchandises de détail (3) sont transportées dans les sens de transport (T) des convoyeurs à bande d'évacuation (23) depuis les parties des bandes (26) des convoyeurs à bande d'évacuation (23) avec un frottement par adhérence (28) supérieur et dans lesquelles les parties à frottement par adhérence (27) minime et les parties à frottement par adhérence (28) supérieur s'alternent sur les bandes (26).

10. Procédé selon l'une des revendications 7 à 9,
- dans lequel le convoyeur à bande d'alimentation (4, 22) est incliné, notamment basculé, au moins dans une section de transfert (10, 21) du brin supérieur (15) en direction des convoyeurs à bande d'évacuation (6, 23) pendant le transport des marchandises de détail (3) et pendant la prise en charge et/ou le transfert des marchandises de détail (3) et
- dans lequel les marchandises de détail (3) agencées au moins sur la section de transfert (10, 21) du brin supérieur (15) entrent en contact avec au moins un convoyeur à bande d'évacuation (6, 23).

11. Procédé selon l'une des revendications 7 à 10,
- dans lequel au moins un convoyeur à bande d'évacuation (6, 23) est déployé ou rétracté dans le sens du télescopage après le transport d'au moins une marchandise de détail (3) avec au moins un convoyeur à bande d'évacuation (6, 23) et
- dans lequel au moins un convoyeur à bande d'évacuation (6, 23) est progressivement rétracté ou déployé dans le sens du télescopage après le transport de diverses marchandises de détail (3) avec au moins un convoyeur à bande d'évacuation (6, 23).

12. Procédé selon l'une des revendications 7 à 11, dans lequel des colis sont transportés sous forme de marchandises de détail (3) avec le convoyeur à bande d'alimentation (4, 22) et les convoyeurs à bande d'évacuation (6, 23).

13. Procédé de chargement d'un espace de chargement (8), de préférence d'une structure (9) d'un véhicule utilitaire (16), notamment d'un camion, d'une remorque ou d'une semi-remorque, en utilisant le procédé selon l'une des revendications 7 à 12,
- dans lequel les marchandises de détail (3) sont transportées les unes à côté des autres dans l'espace de chargement (8) par les convoyeurs à bande d'évacuation (6, 23).

14. Procédé selon la revendication 13,
- dans lequel au moins un convoyeur d'évacuation (6, 23), notamment les convoyeurs à bande d'évacuation (6, 23), est/sont rétracté(s) avec le chargement de l'espace de chargement (8) à emporter dans le sens du télescopage, notamment progressivement.
